# EUROPÄISCHE PATENTSCHRIFT

(11) **EP 0 541 736 B1**
(45) Veröffentlichungstag und Bekanntmachung des Hinweises auf die Patenterteilung: **01.06.1994**
(21) Anmeldenummer: 92908756.7
(22) Anmeldetag: 11.05.1992
(51) Int. Cl.: B62H 5/00, B62K 25/02, B60B 27/02

(54) **SCHNELLSPANNABE FÜR FAHRRÄDER**
QUICK-FIT HUB FOR BICYCLES
MOYEU A SERRAGE RAPIDE POUR BICYCLETTES

(30) Priorität: 28.05.1991 DE 9106549 U; 21.12.1991 DE 4142507
(43) Veröffentlichungstag der Anmeldung: 19.05.1993
(73) Patentinhaber: FELL, Holger, D-79106 Freiburg (DE)
(72) Erfinder: FELL, Holger, D-79106 Freiburg (DE)
(74) Vertreter: Goy, Wolfgang, Dipl.-Phys.
(86) Internationale Anmeldenummer: DE9200399
(87) Internationale Veröffentlichungsnummer: WO9221551

(56) Entgegenhaltungen:
- WO-A-86/06695
- US-A- 4 114 409
- US-A- 4 724 692
- US-A- 5 022 672

## Beschreibung

Die Erfindung betrifft eine Schnellspannabe für Fahrräder mit einem diebstahlgesicherten Verschluß, bei dem mittels eines durch einen in eine Öffnung einsetzbaren Hebel verschwenkbaren Exzenterbolzens ein Spannelement axial verschiebbar ist.

Schnellspannaben für Fahrräder sind bekannt. Sie haben den Zweck, beispielsweise bei Rennrädern oder bei Mountain-Bikes ein schnelles Herausnehmen und Einsetzen der Laufräder zu ermöglichen.

Bei den bekannten Schnellspannaben ist ein spezieller Verschluß vorgesehen. Dieser besteht aus einer den Nabenkörper axial durchragenden sowie axial verschiebbaren Stange, die an ihrem einen Ende mit einem fest angeordneten Kopf versehen ist, auf den ein bolzenähnliches Spannelement aufgeschoben und in dem mittels eines Hebels ein Exzenterbolzen verschwenkbar gelagert ist und dabei bei der Verschwenkbewegung das Spannelement axial verschiebt. Auf der Gegenseite ist auf die den Nabenkörper durchragende Stange eine Spannmutter aufgedreht.

Bei einer aus der Praxis bekannten Ausführungsform eines derartigen Verschlusses der eingangs angegebenen Art ist dieser diebstahlgesichert. Zu diesem Zweck ist der im Kopf der Stange sowie in dem aufgeschobenen Spannelement angeordnete Exzenterbolzen mit einer Inbus-Öffnung versehen. Zum Betätigen des Verschlusses wird ein Inbusschlüssel in den Spannbolzen eingeführt und in die entsprechende Richtung gedreht, so daß die Laufradnabe entweder von der Fahrradgabel gelöst oder auf dieser befestigt wird. Da somit der Hebel zum Betätigen des Inbuseinsatzbolzens nicht dauerhaft an diesem angeordnet ist, ist dadurch ein gewisser Diebstahlschutz gewährleistet, da eine Entnahme des entsprechenden Laufrades die Verwendung eines Inbusschlüssels voraussetzt. Ein Gelegenheitsdiebstahl wird dadurch zwar verhindert, nicht jedoch ein gezielter Diebstahl, da der Dieb einen entsprechenden Inbusschlüssel zur Verfügung haben muß, was kein nennenswertes Hindernis für den beabsichtigten Diebstahl darstellt, da derartige Inbusschlüssel frei im Handel erhältlich sind.

Aus der US-A-4 114 409 ist eine Diebstahlsicherung für eine Schnellspannabe für Fahrräder offenbart, bei der ein Fortsatz des verschwenkbaren Exzenterbolzens mittels eines entsprechenden Schlosses fixiert und daher gegen Drehen gesichert werden kann.

Ein ähnliches Prinzip ist in der US-A-4 724 692 offenbart. Hier wird der Exzenterbolzen mittels eines Betätigungselements vom Hebel entriegelt, so daß beim Verschwenken des Hebels der ansich verschwenkbare Exzenterbolzen nicht mitgedreht wird und somit eine Entriegelung nicht stattfinden kann.

In der WO-A-86/06695 ist eine Diebstahlsicherung für eine Schnellspannabe offenbart, bei der der durch den Hebel betätigbare Exzenterbolzen dadurch fixiert werden kann, daß ein Stift eines Schlosses in eine entsprechende Durchbrechung im Exzenterbolzen eingreift, so daß bei hineingestecktem Stift der Exzenterbolzen und damit der Hebel nicht mehr gedreht werden kann.

Davon ausgehend liegt der Erfindung die **Aufgabe** zugrunde, eine verbesserte Diebstahlsicherung für eine Schnellspannabe für Fahrräder der eingangs angegebenen Art zu schaffen.

Die technische **Lösung** dieser Aufgabe ist gekennzeichnet durch eine die zum Einsetzen des Hebels vorgesehene Öffnung des Exzenterbolzens wahlweise durch ein Schloß versperrende oder freigebende Diebstahlsicherung.

Eine nach dieser technischen Lehre ausgebildete Diebstahlsicherung hat den Vorteil, daß damit nicht nur der Gelegenheitsdiebstahl verhindert wird sondern auch ein gezielter Diebstahl. Die Grundidee der Erfindung besteht dabei darin, daß der Schnellspannverschluß im gespannten Zustand abschließbar ist, d.h. die im Exzenterbolzen vorgesehene Inbusöffnung ist für den Inbusschlüssel nicht zugänglich und somit die Schnellspannabe nicht entspannbar. Dadurch ist sowohl das vordere als auch das hintere Laufrad des Fahrrads auf technisch einfache Weise sicherbar.

Eine bevorzugte Weiterbildung schlägt vor, daß das Schloß am Spannelement angeordnet ist. Dies stellt eine technisch einfache Möglichkeit zur Anbringung des Schlosses dar, indem das Spannelement lediglich entsprechend umgerüstet zu werden braucht, so daß auch herkömmliche Schnellspannaben auf einfache Weise umgerüstet werden können.

Vorzugsweise weist das Schloß eine mit der Öffnung des Exzenterbolzens fluchtende, wahlweise verschließbare oder öffenbare Durchgangsöffnung zum Hindurchstecken des einsetzbaren Hebels auf. Dadurch ist eine technisch einfache Möglichkeit zur Ausbildung des Schlosses realisiert, indem dieses wahlweise den Zugang zur Öffnung des Exzenterbolzens freigibt oder verschließt.

Eine bevorzugte Weiterbildung schlägt vor, daß auf dem Spannelement eine das Schloß tragende sowie das Spannelement koaxial umgebende Hülse fest angeordnet ist. Diese Hülse, welche insbesondere aus Metall besteht, weist dabei vorzugsweise einen derartigen Innendurchmesser auf, daß sie alle marktüblichen Spannelemente aufnehmen kann. Die Hülse ist dabei mit den gleichen Bohrungen wie das Spannelement versehen, so daß die Zugänglichkeit für den Spannhebel gewährleistet ist.

In einer Weiterbildung hiervon wird vorgeschlagen, daß die Hülse in ihrer Mantelfläche wenigstens eine Öffnung, vorzugsweise zwei diametral einander gegenüberliegende Öffnungen aufweist, in die das Ende des Exzenterbolzens unter Fixierung der Hülse auf dem Spannelement hineinragt. Dadurch ist auf technisch einfache Weise eine Befestigung der Hülse auf dem zu sichernden Spannelement gewährleistet, indem diese Hülse zunächst auf das Spannelement aufgeschoben wird, um anschließend den Exzenterbolzen durch die entsprechenden Öffnungen hineinzustecken und beispielsweise mittels einer Schraube oder eines Sprengringes innerhalb der Querbohrungen zu fixieren, so daß eine feste Verbindung zwischen der Hülse und dem Spannelement unter Verwendung des ohnehin notwendigen Exzenterbolzens geschaffen ist.

Eine Weiterbildung der Hülse schlägt vor, daß die Mantelfläche der Hülse im wesentlichen ein U-Profil aufweist, in dem ein eine Durchbrechung aufweisender Ring frei drehbar gelagert ist, wobei auf dem Ring das Schloß befestigt ist. Durch diesen frei drehbaren Ring, der beispielsweise aus Metall bestehen kann, ist gewährleistet, daß die Sicherungseinrichtung nicht mit Gewalt abgedreht werden kann, da durch die freie Drehbarkeit des Ringes kein kraftmäßiger Angriff mittels eines entsprechenden Werkzeuges, beispielsweise mittels einer Zange möglich ist.

Um diesen Effekt zu unterstützen, überragt vorzugsweise der Ring das U-Profil der Hülse radial. Dabei weist der Ring vorteilhafterweise ein T-Profil auf, wobei das Dach dieses T-Profils die beiden Schenkel der U-förmigen Hülse abdeckt.

Eine weitere Weiterbildung schlägt vor, daß zwischen der Hülse und dem Spannelement eine Adapterhülse angeordnet ist. Diese Adapterhülse dient als Ausgleich von zu großen Unterschieden zwischen dem Außendurchmesser des Spannelements und dem Innendurchmesser der Hülse. Die Adapterhülse kann dabei stirnseitig abgeschlossen sein und verhindert somit das Eindringen von Schmutz oder Wasser.

In einer alternativen Ausführungsform weist die Mantelfläche der Hülse im wesentlichen ein U-Profil auf, in dem ein Körper sowie ein aus dem Körper im Entriegelungszustand herausfahrbarer, U-förmiger Bügel eines Vorhängeschlosses korrespondierend aufgenommen ist. Auch dadurch ist die Grundidee der Erfindung realisiert, nämlich den Zugang zu der Öffnung im Exzenterbolzen zu versperren. Erst durch Lösen des Vorhängeschlosses wird ein Zugang ermöglicht, so daß der Hebel eingeführt werden kann. Das Vorhängeschloß ist mit seinem Körper sowie mit seinem U-förmigen Bügel passend zur U-förmig profilierten Mantelfläche der Hülse profiliert. Um störende Geräusche zu vermeiden, können zwischen den beweglichen Teilen Kunststoffbeschichtungen vorgesehen sein.

Um auch bei dieser Ausführungsform einen möglichen Angriff eines Werkzeuges zur gewaltsamen Öffnung des Verschlusses zu erschweren, ist in einer bevorzugten Weiterbildung das Vorhängeschloß im U-Profil frei drehbar.

Eine weitere Weiterbildung der erfindungsgemäßen Diebstahlsicherung schlägt vor, daß diese zumindest teilweise von einer Kunststoffummantelung umgeben ist. Dadurch wird einerseits das Eindringen von Schmutz erschwert, andererseits wird das Ansetzen eines Werkzeuges weiter verhindert.

Ausgehend von einer Schnellspannabe, wobei diese an dem bezüglich des Verschlusses anderen Ende eine auf einer axial verschiebbaren Stange aufgedrehte Spannmutter aufweist, wird in einer weiteren Weiterbildung vorgeschlagen, daß auf der Spannmutter ein dazu koaxialer, frei drehbarer Ring angeordnet ist. Somit wird auch bei der Gegenseite der Schnellspannnabe ein Zugriff verhindert, so daß auch unter Gewalteinwirkung die Spannmutter nicht entspannbar ist. Vorzugsweise besteht auch hier der Ring aus Metall.

In einer Weiterbildung hiervon wird vorgeschlagen, daß der Ring in einer Umfangsnut der Spannmutter geführt ist. Dadurch ist eine technisch einfache Anordnung des Ringes auf der Spannmutter gewährleistet. Die Umfangsnut kann dabei durch eine im Längsschnitt realisierte T-Profilierung gegeben sein, wobei auf der anderen Seite ein Abstandsring angeordnet ist, so daß zwischen diesen Teilen die Umfangsnut definiert ist.

Schließlich wird in einer Weiterbildung vorgeschlagen, daß der Verschluß mit seiner Diebstahlsicherung einen Fortsatz aufweist, mit dem weitere diebstahlgefährdete Teile des Fahrrades abdeckbar sind. Beispielsweise kann es sich dabei um Teile der Schaltung handeln.

Zwei Ausführungsbeispiele einer erfindungsgemäßen Schnellspannabe wird nachfolgend anhand der Zeichnungen beschrieben. In diesen zeigt:
- Fig. 1: eine schematische Darstellung einer ersten Ausführungsform des Schnellspannverschlusses;
- Fig. 2: eine zweite Auführungsform des Schnellspannverschusses in einer Darstellung entsprechend der in Fig. 1;
- Fig. 3: die Gegenseite der Schnellspannverschlüsse der Fig. 1 und 2.

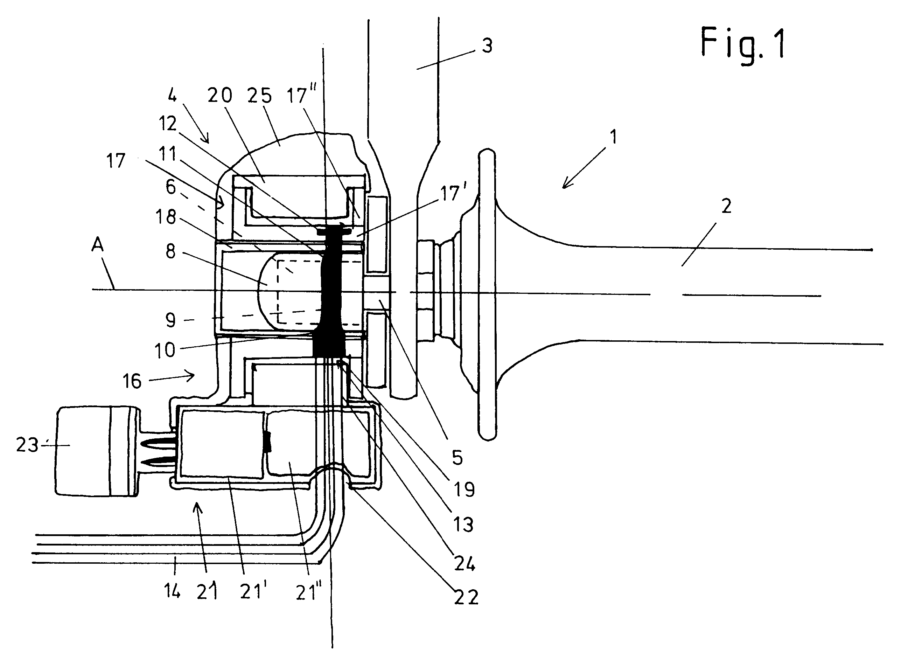

Der Schnellspannverschluß in Fig. 1 weist zunächst eine Schnellspannabe 1 mit einem Nabenkörper 2 auf, an dem die nicht dargestellten Speichen eines Laufrades in der üblichen Weise befestigt sind. Die Schnellspannabe 1 des Laufrades ist dabei zwischen den Gabeln 3 eines Fahrrades, insbesondere Rennrades oder Mountain-Bikes befestigt.

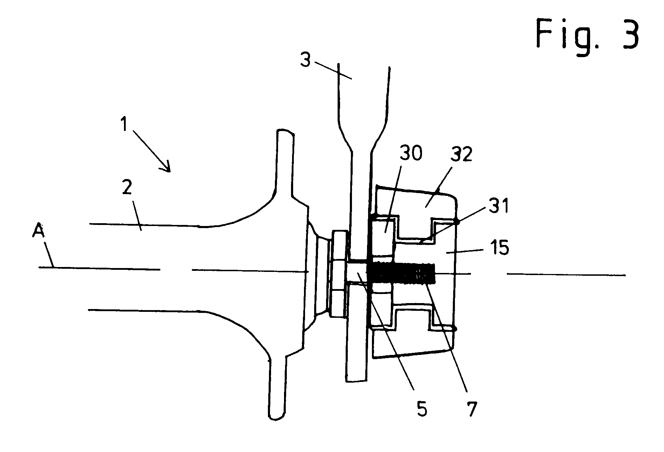

Für diese Befestigtung weist die Schnellspannabe 1 einen Verschluß 4 auf. Dabei wird der Nabenkörper 2 axial von einer axial verschiebbaren Stange 5 durchquert, welche auf der einen Seite mit einem bolzenähnlichen Kopf 6 versehen ist, während auf der Gegenseite (Fig. 3) ein Achsengewinde 7 vorgesehen ist. Zwischen dem Kopf 6 der Stange 5 und dem Nabenkörper 2 ist dabei eine nicht dargestellte Druckfeder angeordnet, welche die Stange 5 in die in der Zeichnung linke Position zu verschieben versucht. Auf den Kopf 6 der Stange 5 ist ein kappen- sowie bolzenförmiges Spannelement 8 aufgesetzt. Der Kopf 6 weist eine zu der Nabenachse A querverlaufende Querbohrung 9 auf. Entsprechend weist das hülsenförmige Spannelement 8 zu dieser Querbohrung 9 des Kopfes 6 fluchtende Bohrungen 10 in der Mantelfläche auf. Die Querbohrung 9 des Kopfes 6 sowie die beiden Bohrungen 10 des Spannelements 8 werden von einem Exzenterbolzen 11 durchragt und am einen Ende mittels eines Sprengringes 12 gesichert. Statt des Sprengringes 12 kann auch eine Schraube verwendet werden. Das andere Ende des Exzenterbolzens 11 ist mit einer in der Bolzenachse liegenden Öffnung 13 in Form eines Inbus-6-Ecks versehen. In dieser Öffnung 13 kann ein Hebel 14 in Form eines Inbusschlüssels eingeführt werden. Durch Drehen dieses Hebels 14 wird der Exzenterbolzen 11 innerhalb des Kopfes 6 der Stange 5 verdreht, wobei durch die Exzentrizität das Spannelement 8 axial verschoben wird und somit eine Verspannung der Schnellspannabe 1 auf der Gabel 3 erzeugt wird.

Entsprechend ist auf der Gegenseite der Stange 5 auf das Achsengewinde 7 eine Spannmutter 15 aufgeschraubt. Somit wird auch hier durch die Verschiebung der Stange 5 eine Verspannung der Schnellspannabe 1 auf der Gabel 3 bewirkt.

Die zuvor beschriebene Schnellspannabe 1 mit dem Verschluß 4 ist in dieser Form aus dem Stand der Technik bekannt. Zusätzlich ist aber die erfindungsgemäße Konstruktion mit einer Diebstahlsicherung 16 ausgestattet, welche nachfolgend beschrieben werden soll:

So ist zunächst für die Diebstahlsicherung 16 auf das kappenförmige Spannelement 8 eine Hülse 17 aufgeschoben. Zwischen dem Spannelement 8 und dieser Hülse 17 ist dabei eine Adapterhülse 18 zwischengeschoben, welche außenseitig abgeschlossen ist und das Eindringen von Schmutz oder Wasser verhindert. Fluchtend zu der Querbohrung 9 des Kopfes 6 sowie zu der Bohrung 10 des Spannelements 8 ist die Hülse 17 (sowie die Adapterhülse 18) diametral einander gegenüberliegend mit Öffnungen 19 versehen, in die die beiden Enden des Exzenterbolzens 11 ragen, so daß damit eine Fixierung der Hülse 17 (sowie der Adapterhülse 18) auf dem Spannelement 8 gewährleistet ist.

Die Hülse 17 weist ein U-förmiges Längsprofil auf. Zu diesem Zweck besteht die Hülse 17 aus einem Hülsenkörper 17′ mit einem L-förmigen Längsprofil, auf den ein Abschlußring 17˝ aufgepreßt ist. In die dadurch definierte Umfangsnut ist ein Ring 20 aus Metall frei drehbar angeordnet, wobei dieser Ring 20 radial die Hülse 17 überragt. Zu diesem Zweck weist der Ring 20 ein T-förmiges Längsprofil auf, wobei das Dach des T-Profils die beiden Schenkel der Hülse 17 abdeckt. Am Ring 20 ist ein Schloß 21 befestigt. Dieses Schloß 21 weist ein Schloßgehäuse 21′ auf, in dem ein massiver Stahlzylinder 21˝ drehbar ist. Weiterhin weist das Schloß 21 in dem Schloßgehäuse 21′ sowie in dem Stahlzylinder 21˝ eine Durchgangsöffnung 22 auf, welche mittels eines Schlüssels 23 durch Verstellen des Stahlzylinders 21˝ verschließbar ist. Fluchtend zu dieser Durchgangsöffnung 22 im Schloßgehäuse 21′ sowie im Stahlzylinder 21˝ des Schlosses 21 weist der Ring 20 eine Durchbrechung 24 auf.

Schließlich ist der Verschluß 4 noch mit einer Kunststoffummantelung 25 ausgestattet.

Die beschriebene Diebstahlsicherung 16 der Ausführungsform in Fig. funktioniert wie folgt:

Im verriegelten Zustand ist die Durchgangsöffnung 22 des Schlosses 21 versperrt, so daß die Öffnung 13 des Exzenterbolzens 11 für den Hebel 14 nicht zugänglich ist. Soll das Laufrad aus der Gabel 3 des Fahrrads entnommen werden, wird mittels des Schlüssels 23 das Schloß 21 geöffnet und dadurch die Durchgangsöffnung 22 frei gemacht. Der Ring 20 wird dann derart gedreht, daß seine Durchbrechung 24 mit der Öffnung 13 des Exzenterbolzens 11 fluchtet, so das der Hebel 14 in Form des Inbusschlüssels eingeführt und der Verschluß 4 entspannt werden kann.

Das Verriegeln erfolgt in umgekehrter Weise.

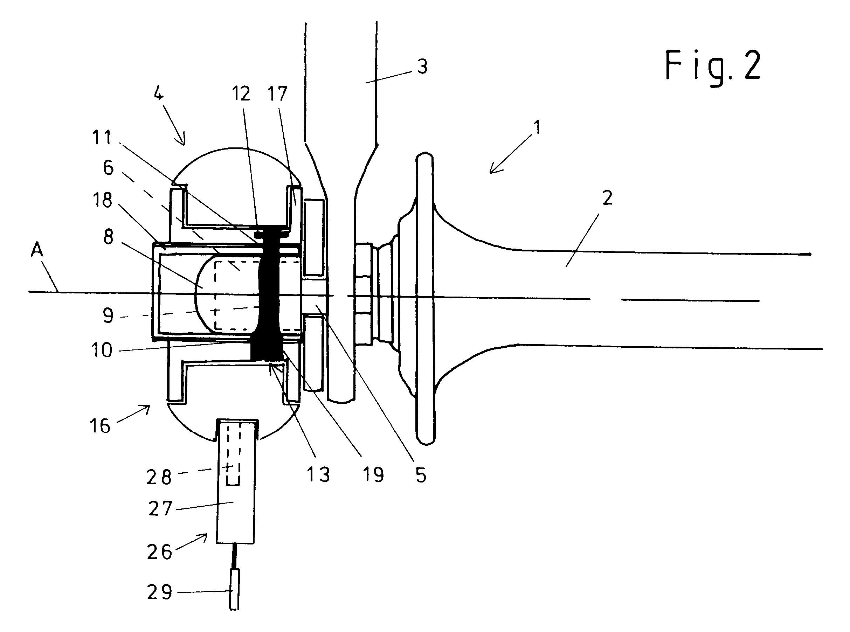

Bei der Ausführungsform in Fig. 2 ist ebenfalls eine Hülse 17 mit einem U-förmigen Längsprofil vorgesehen. Als Sicherung dient hier ein Vorhängeschloß 26. Dieses besteht aus einem Körper 27 sowie aus einem U-förmigen Bügel 28. Der Körper 27 sowie der Bügel 28 des Vorhängeschlosses 26 sind passend zur Umfangsnut der Hülse 17 ausgebildet. Dadurch ist bei angebrachtem Vorhängeschloß 26 die Öffnung 13 des Exzenterbolzens 11 abgedeckt und damit für den Hebel 14 nicht zugänglich. Zum Entspannen des Verschlusses 4 wird dabei mittels eines Schlüssels 29 zunächst das Vorhängeschloß 26 dergestalt entriegelt, daß der U-förmige Bügel 28 aus dem Körper 27 herausziehbar und verdrehbar ist, so daß das Vorhängeschloß 26 von der Hülse 17 abgenommen werden kann. Dadurch wird die Öffnung 13 des Exzenterbolzens 11 zugänglich, so daß dieser mittels des Hebels 14 betätigt werden kann.

Bei beiden Ausführungsformen des Verschlusses 4 gemeinsam ist auf der Gegenseite der Schnellspannabe 1 (Fig. 3) eine Sicherung, mit der ein gewaltsames Aufdrehen der Spannmutter 15 verhindert wird. Zu diesem Zweck ist zwischen der Gabel 3 und der Spannmutter 15 ein Abstandring 30 angeordnet, der zusammen mit der Spannmutter 15 eine Umfangsnut 31 definiert. In dieser Umfangsnut 31 ist ein freilaufender Ring 32 angeordnet, so daß beim Ansetzen beispielsweise einer Zange auf die Spannmutter 15 keine Drehwirkung ausgeübt werden kann.

In einer nicht dargestellten Ausführungsform kann die Diebstahlsicherung 16 einen Fortsatz aufweisen, um beispielsweise die Befestigung der Gangschaltung abzudecken und daher ebenfalls vor Diebstahl zu sichern.

## Patentansprüche

1. Schnellspannabe (1) für Fahrräder
mit einem diebstahlgesicherten Verschluß (4), bei dem mittels eines durch einen in eine Öffnung (13) einsetzbaren Hebel (14) verschwenkbaren Exzenterbolzens (11) ein Spannelement (8) axial verschiebbar ist,
**gekennzeichnet durch**
eine die zum Einsetzen des Hebels (14) vorgesehene Öffnung (13) des Exzenterbolzens (11) wahlweise durch ein Schloß (21, 26) versperrende oder freigebende Diebstahlsicherung (16).

2. Schnellspannabe nach Anspruch 1, dadurch gekennzeichnet, daß das Schloß (21, 26) am Spannelement (8) angeordnet ist.

3. Schnellspannabe nach Anspruch 1 oder 2, dadurch gekennzeichnet, daß das Schloß (21) eine mit der Öffnung (13) des Exzenterbolzens (11) fluchtende, wahlweise verschließbare oder öffenbare Durchgangsöffnung (22) zum Hindurchstecken des einsetzbaren Hebels (14) aufweist.

4. Schnellspannabe nach einem der Ansprüche 1 bis 3, dadurch gekennzeichnet, daß auf dem Spannelement (8) eine das Schloß (21, 26) tragende sowie das Spannelement (8) koaxial umgebende Hülse (17) fest angeordnet ist.

5. Schnellspannabe nach Anspruch 4. dadurch gekennzeichnet, daß die Hülse (17) in ihrer Mantelfläche wenigstens eine Öffnung (19), vorzugsweise zwei diametral einander gegenüberliegende Öffnungen (19) aufweist, in die das Ende des Exzenterbolzens (11) unter Fixierung der Hülse (17) auf dem Spannelement (8) hineinragt.

6. Schnellspannabe nach Anspruch 4 oder 5, dadurch gekennzeichnet, daß die Mantelfläche der Hülse (17) im wesentlichen ein U-Profil aufweist, in dem ein eine Durchbrechung (24) aufweisender Ring (20) frei drehbar gelagert ist, wobei auf dem Ring (20) das Schloß (21) befestigt ist.

7. Schnellspannabe nach Anspruch 6, dadurch gekennzeichnet, daß der Ring (20) das U-Profil der Hülse (17) radial überragt.

8. Schnellspannabe nach einem der Ansprüche 4 bis 7, dadurch gekennzeichnet, daß zwischen der Hülse (17) und dem Spannelement (8) eine Adapterhülse (18) angeordnet ist.

9. Schnellspannabe nach Anspruch 4 oder 5 sowie gegenbenenfalls nach Anspruch 8, dadurch gekennzeichnet, daß die Mantelfläche der Hülse (17) im wesentlichen ein U-Profil aufweist, in dem ein Körper (27) sowie ein aus dem Körper (27) im Entriegelungszustand herausfahrbarer, U-förmiger Bügel (28) eines Vorhängeschlosses (26) korrespondierend aufgenommen ist.

10. Schnellspannabe nach Anspruch 9, dadurch gekennzeichnet, daß das Vorhängeschloß (26) im U-Profil frei drehbar ist.

11. Schnellspannabe nach einem der Ansprüche 1 bis 10, dadurch gekennzeichnet, daß die Diebstahlsicherung (16) zumindest teilweise von einer Kunststoffummantelung (25) umgeben ist.

12. Schnellspannabe nach einem der Ansprüche 1 bis 11, wobei die Schnellspannabe (1) an dem bezüglich des Verschlusses (4) anderen Ende eine auf einer axial verschiebbaren Stange (5) aufgedrehte Spannmutter (15) aufweist, dadurch gekennzeichnet, daß auf der Spannmutter (15) ein dazu koaxialer, frei drehbarer Ring (32) angeordnet ist.

13. Schnellspannabe nach Anspruch 12. dadurch gekennzeichnet, daß der Ring (32) in einer Umfangsnut (31) der Spannmutter (15) geführt ist.

14. Schnellspannabe nach einem der Ansprüche 1 bis 13, dadurch gekennzeichnet, daß der Verschluß (4) mit seiner Diebstahlsicherung (16) einen Fortsatz aufweist. mit dem weitere diebstahlgefährdete Teile des Fahrrads abdeckbar sind.

## Claims

1. Quick-release hub (1) for cycle wheels with a theft-protected lock (4) in which a clamping element (8) can be displaced axially by means of an eccentric bolt (11) which is swivelled by a lever (14) insertable through an opening (13),
characterised by
a theft-protection device (16) which blocks or releases as required, via a lock (21, 26), the opening (13) in the eccentric bolt (11) provided for insertion of the lever (14).

2. Quick-release hub according to Claim 1, characterised in that the lock (21, 26) is arranged on the clamping element (8).

3. Quick-release hub according to Claim 1 or 2, characterised in that the lock (21) has for insertion of the insertable lever (14) a through opening (22) which can be opened or closed as required and which is aligned with the opening (13) in the eccentric bolt (11).

4. Quick-release hub according to any of Claims 1 to 3, characterised in that a sleeve (17) which carries the lock (21, 26) and coaxially surrounds the clamping element (8) is firmly attached to the clamping element (8).

5. Quick-release hub according to Claim 4, characterised in that the sleeve (17) has in its shell at least one opening (19), preferably two diametrically opposed openings (19), into which projects the end of the eccentric bolt (11) fixing the sleeve (17) to the clamping element (8).

6. Quick-release hub according to Claim 4 or 5, characterised in that the shell of the sleeve (17) essentially has a U-shaped profile in which is mounted a freely rotatable ring (20) with an opening (24), where the lock (21) is attached to the ring (20).

7. Quick-release hub according to Claim 6, characterised in that the ring (20) projects radially beyond the U-profile of the sleeve (17).

8. Quick-release hub according to any of Claims 4 to 7, characterised in that between the sleeve (17) and the clamping element (8) is arranged an adapter sleeve (18).

9. Quick-release hub according to Claim 4 or 5 and where applicable Claim 8, characterised in that the shell of the sleeve (17) essentially has a U-shaped profile in which is held a body (27) and a U-shaped bracket (28) of a padlock (26) which can be withdrawn from the body (27) in its unlocked state.

10. Quick-release hub according to Claim 9, characterised in that the padlock (26) is freely rotatable in the U-shaped profile.

11. Quick-release hub according to any of Claims 1 to 10, characterised in that the theft-protection device (16) is surrounded at least partially by a plastic sleeve (25).

12. Quick-release hub according to any of Claims 1 to 11, where the quick-release hub (1) has at the opposite end to the lock (4) a clamping nut (15) threaded onto an axially displaceable rod (5), characterised in that on the clamping nut (15) and coaxial with this is arranged a freely rotatable ring (32).

13. Quick-release hub according to Claim 12, characterised in that the ring (32) is guided in a peripheral groove (31) of the clamping nut (15).

14. Quick-release hub according to any of Claims 1 to 13, characterised in that the lock (4) with its theft-protection device (16) has an extension which covers other parts of the cycle open to theft.

## Revendications

1. Moyeu à serrage rapide (1) pour bicyclettes muni d'un dispositif de fermeture antivol (4), dans lequel un élément de serrage (8) peut être déplacé axialement au moyen d'un boulon excentrique (11) pouvant pivoter à l'aide d'un levier (14) qui s'engage dans une ouverture (13), caractérisé en ce qu'il comprend un dispositif de sécurité antivol (16) qui, au moyen d'une serrure (21, 26), bloque ou libère au choix l'ouverture (13) du boulon excentrique (11) prévue pour engager le levier (14).

2. Moyeu à serrage rapide selon la revendication 1, caractérisé en ce que la serrure (21, 26) est montée sur l'élément de serrage (8).

3. Moyeu à serrage rapide selon la revendication 1 ou 2, caractérisé en ce que la serrure (21) comporte une ouverture débouchante (22) qui se trouve dans l'alignement de l'ouverture (13) du boulon excentrique (11), qui peut être fermée ou ouverte au choix et qui sert à introduire le levier enfichable (14).

4. Moyeu à serrage rapide selon l'une des revendications 1 à 3, caractérisé en ce qu'un manchon (17) qui porte la serrure (21, 26) et qui entoure coaxialement l'élément de serrage (8) est monté à demeure sur l'élément de serrage (8).

5. Moyeu à serrage rapide selon la revendication 4, caractérisé en ce que le manchon (17) comporte, dans sa surface périphérique, au moins une ouverture (19), de préférence deux ouvertures (19) diamétralement opposées, dans laquelle ou lesquelles l'extrémité du boulon excentrique (11) pénètre lors du blocage du manchon (17) sur l'élément de serrage (8).

6. Moyeu à serrage rapide selon la revendication 4 ou 5, caractérisé en ce que la surface périphérique du manchon (17) présente sensiblement un profil en U dans lequel un anneau (20) pourvu d'un perçage (24) est monté en libre rotation, la serrure (21) étant fixée à l'anneau (20).

7. Moyeu à serrage rapide selon la revendication 6, caractérisé en ce que l'anneau (20) dépasse radialement du profil en U du manchon (17).

8. Moyeu à serrage rapide selon l'une des revendications 4 à 7, caractérisé en ce qu'un manchon adaptateur (18) est disposé entre le manchon (17) et l'élément de serrage (8).

9. Moyeu à serrage rapide selon la revendication 4 ou 5 ainsi que, le cas échéant, selon la revendication 8, caractérisé en ce que la surface périphérique du manchon (17) présente sensiblement un profil en U dans lequel sont logés, de manière correspondante, un corps (27) ainsi que l'étrier en U (28) d'un cadenas (26), ledit étrier pouvant être sorti du corps (27) en position déverrouillée.

10. Moyeu à serrage rapide selon la revendication 9, caractérisé en ce que le cadenas (26) peut tourner librement dans le profil en U.

11. Moyeu à serrage rapide selon l'une des revendications 1 à 10, caractérisé en ce que le dispositif de sécurité antivol (16) est entouré, au moins partiellement, par une enveloppe en matière plastique (25).

12. Moyeu à serrage rapide selon l'une des revendications 1 à 11, le moyeu à serrage rapide (1) comportant, à l'autre extrémité par rapport au dispositif de fermeture (4), un écrou de serrage (15) vissé sur une tige (5) déplaçable axialement, caractérisé en ce que, sur l'écrou de serrage (15), est monté un anneau (32) qui est coaxial audit écrou de serrage et qui peut tourner librement.

13. Moyeu à serrage rapide selon la revendication 12, caractérisé en ce que l'anneau (32) est guidé dans une gorge périphérique (31) de l'écrou de serrage (15).

14. Moyeu à serrage rapide selon l'une des revendications 1 à 13, caractérisé en ce que le dispositif de fermeture (4) muni d'un dispositif de sécurité antivol (16) comporte un prolongement qui permet de recouvrir d'autres pièces de la bicyclette susceptibles d'être volées.
